# EUROPÄISCHE PATENTANMELDUNG

(11) **EP 4 741 880 A1**
(43) Veröffentlichungstag der Anmeldung: **13.05.2026**
(21) Anmeldenummer: 25211916.9
(22) Anmeldetag: 29.10.2025
(51) Int. Cl.: G01S 19/07

(54) **SELBSTFAHRENDE BAUMASCHINE UND ANORDNUNG UMFASSEND EINE SELBSTFAHRENDE BAUMASCHINE UND EIN MOBILES ENDGERÄT SOWIE EIN VERFAHREN ZUM AUFFINDEN EINES REFERENZSTATIONS-AUFSTELLPUNKTES EINER IM UMKREIS EINER SELBSTFAHRENDEN BAUMASCHINE AUFZUSTELLENDEN REFERENZSTATION**

(30) Priorität: 07.11.2024 DE 102024132433
(71) Anmelder: Wirtgen GmbH, 53578 Windhagen (DE)
(72) Erfinder: Müller, René, 53560 Vettelschoß (DE); DeJong, Ruud, Olney, 62450 (US)
(74) Vertreter: Oppermann, Frank

(57) **Zusammenfassung**

Die erfindungsgemäße selbstfahrende Baumaschine I verfügt über eine DGNSS-Rover-Einheit 14 zum Empfangen von Satellitensignalen eines globalen Navigationssatellitensystems und von Korrektursignalen einer im Umkreis der selbstfahrenden Baumaschine aufzustellenden Referenzstation 15. Die DGNSS-Rover-Einheit 14 umfasst eine Rechen- und Auswerteeinheit 18, die derart konfiguriert ist, dass auf der Grundlage der Satellitensignale und der Korrektursignale der Referenzstation die Position eines Baumaschinen-Referenzpunktes R auf der Baumaschine beschreibende Baumaschinen-Positionsdaten bestimmt werden. Die Rechen- und Auswerteeinheit 18 ist weiterhin derart konfiguriert, dass für einen in einem Referenzstations-Positionsdaten-Speicher 23 gespeicherten Referenzstations-Positionsdatensatz mindestens ein maschinenlesbarer Datensatz, insbesondere QR-Code, erzeugt wird, der auf einem Display 8A dargestellt wird. Der QR-Code kann mit einem Smartphone 26 eingelesen werden, auf dem ein Kartendienst mit einer Navigationsfunkton installiert ist, so dass sich der Aufstellpunkt, an dem eine Referenzstation aufgestellt werden soll, im Gelände leicht finden lässt. Bei einer alternativen Ausführungsform können die Daten auch mit einer auf der RFID-Technik basierenden NFC-Empfangseinheit (NFC-Lesegerät) eingelesen werden.

## Beschreibung

Die Erfindung betrifft eine selbstfahrende Baumaschine mit einem von Laufwerken getragenen Maschinenrahmen und einer Arbeitseinrichtung zur Bearbeitung des Bodens oder der Errichtung von Baukörpern auf einem Gelände, wobei die selbstfahrende Baumaschine eine DGNSS-Rover-Einheit zum Empfangen von Satellitensignalen eines globalen Navigationssatellitensystems und von Korrektursignalen einer an einer im Umkreis der selbstfahrenden Baumaschine aufzustellenden Referenzstation umfasst, und die DGNSS-Rover-Einheit eine Rechen- und Auswerteeinheit aufweist, welche derart konfiguriert ist, dass auf der Grundlage der Satellitensignale und der Korrektursignale der Referenzstation die Position eines Baumaschinen-Referenzpunktes auf der Baumaschine beschreibende Baumaschinen-Positionsdaten in einem von der Baumaschine unabhängigen Koordinatensystem bestimmt werden. Darüber hinaus betrifft die Erfindung eine Anordnung umfassend eine selbstfahrende Baumaschine mit einem von Laufwerken getragenen Maschinenrahmen und einer Arbeitseinrichtung zur Bearbeitung des Bodens oder der Errichtung von Baukörpern auf einem Gelände und ein mobiles Endgerät. Des Weiteren betrifft die Erfindung ein Verfahren zum Auffinden eines Referenzstations-Aufstellpunktes einer im Umkreis einer selbstfahrenden Baumaschine aufzustellenden Referenzstation.

Unter selbstfahrenden Baumaschinen werden sämtliche Baumaschinen verstanden, die über eine an einem Maschinenrahmen angeordnete Arbeitseinrichtung zur Errichtung von Baukörpern auf einem Gelände oder zum Verändern des Geländes verfügen. Zu den bekannten selbstfahrenden Baumaschinen gehören beispielsweise Straßenfräsmaschinen, Stabilisierer, Recycler, Gleitschalungsfertiger oder Straßenfertiger. Bei Straßenfräsmaschinen oder Recyclern umfasst die Arbeitseinrichtung eine mit Fräs- oder Schneidwerkzeugen bestückte Fräs-/Schneidwalze, mit der vom Gelände Material in einer vorgegebenen Arbeitsbreite abgetragen werden kann. Bei der Arbeitseinrichtung von Gleitschalungsfertigern handelt es sich um eine Vorrichtung zum Formen von fließfähigem Material, insbesondere Beton, mit welcher Baukörper unterschiedlicher Ausbildung, beispielsweise Leitwände oder Verkehrsinseln, hergestellt werden können. Die bekannten Straßenfertiger verfügen über eine Einbaubohle zum Einbau des Materials für den Straßenbelag. Bodenverdichter wie Straßenwalzen verfügen über wenigstens eine Verdichtungsvorrichtung zur Verdichtung des Untergrundes.

Bei der Errichtung von Baukörpern auf der Geländeoberfläche oder bei der Veränderung des Geländes werden hohe Anforderungen an die Präzision der Bauausführung gestellt. Bei der Steuerung von selbstfahrenden Baumaschinen wird daher zunehmend eine Entlastung des Maschinenführers, der bei der Bauausführung mit einer Vielzahl von Aufgaben belastet ist, angestrebt. Daher kommen bei bekannten selbstfahrenden Baumaschinen Positionsbestimmungssysteme zum Einsatz, welche die Position eines Referenzpunktes auf der selbstfahrenden Baumaschine in einem von der Baumaschine unabhängigen Koordinatensystem bestimmen.

Unter der Bezeichnung GPS (Global Positioning System) ist ein Positionsbestimmungssystem bekannt, welches auf der Auswertung der Signallaufzeiten von Signalen mehrerer Satelliten beruht. Die Abkürzung GPS wird heute umgangssprachlich, zum Teil sogar fachsprachlich, als generische Bezeichnung oder pars pro toto für sämtliche Satellitennavigationssysteme benutzt, die korrekt unter dem Kürzel GNSS (Global Navigation(al) Satellite System) zusammengefasst werden (Wikipedia: GPS). Unter der Bezeichnung DGPS (Differential Global Positioning System) bzw. DGNSS ist ein Verfahren bekannt, welches durch das Ausstrahlen von Korrektursignalen (Bahn- und Zeitsystem) die Genauigkeit der GNSS-Positionsbestimmung steigert. Beim DGNSS können auch als Basisstationen bezeichnete stationäre Referenzstationen zum Einsatz kommen, mit denen sich aus der Abweichung der tatsächlichen und der empfangenen Position die tatsächlichen Laufzeiten der Signale für jeden Satelliten sehr genau bestimmen lassen. Die Differenzen der theoretischen und der tatsächlichen Signallaufzeiten werden an die DGNSS -Empfänger übertragen, welche ihre Position mit diesen Korrektursignalen korrigieren (Wikipedia: DGPS). Nachfolgend werden unter einer GPS-Rover-Einheit oder GNSS-Rover-Einheit auch eine DGPS oder DGNSS-Rover-Einheit oder umgekehrt verstanden, wobei die Begrifflichkeiten (D)GPS und (D)GNSS hierbei synonym verwendet werden.

Die DE 197 56 676 C1 beschreibt eine Straßenfräsmaschine, die über ein DGNSS zur Positionsbestimmung verfügt. Die Baumaschine weist eine DGNSS-Rover-Einheit zum Empfangen von Satellitensignalen eines globalen Navigationssatellitensystems und von Korrektursignalen einer Referenzstation auf, wobei die DGNSS-Rover-Einheit derart konfiguriert ist, dass auf der Grundlage der Satellitensignale und der Korrektursignale die Position eines Referenzpunktes auf der Baumaschine beschreibende Positionsdaten in einem von der Baumaschine unabhängigen Koordinatensystem bestimmt werden. Zur Bestimmung der Korrektursignale muss der Referenzstation ihre eigene Position bekannt sein.

Aus der DE 10 2022 124 484 A1 ist ein Positionsbestimmungssystem zur Bestimmung der Position eines Referenzpunktes auf einer selbstfahrenden Baumaschine bekannt, welches über eine DGNSS-Rover-Einheit zum Empfangen von Satellitensignalen eines globalen Navigationssatellitensystems und von Korrektursignalen einer Referenzstation verfügt. Die Referenzstation ist derart eingerichtet, dass sie ihre eigene Referenzstations-Position selbst bestimmen kann. Da die von der Referenzstation selbst bestimmte Referenzstations-Position aber ungenau ist, wird der Referenzstation die tatsächliche Referenzstations-Position durch eine Initialisierung mitgeteilt.

Die DE 10 2022 124 484 A1 schlägt zur Initialisierung der Referenzstation vor, einen die vorgegebenen Positionen einer Referenzstation beschreibenden Positions-Datensatz aus einer Speichereinheit auszulesen und die tatsächliche Referenzstations-Position auf der Grundlage eines Vergleichs der vorgegebenen Positionen der Referenzstation mit der von der Referenzstation bestimmten Referenzstations-Position zu ermitteln. Der Vergleich erlaubt eine automatisierte Zuordnung der betreffenden Koordinatenwerte, so dass die Koordinatenwerte der tatsächlichen Position der Referenzstation aus dem Positions-Datensatz ausgewählt werden können, ohne dass zusätzliche Eingaben auf der Baustelle erforderlich sind.

Dadurch wird die Initialisierung vereinfacht und fehlerhafte Eingaben werden ausgeschlossen.

Die Referenzstation zum Senden der Korrektursignale an die DGNSS-Rover-Einheit wird zur Erhöhung der Genauigkeit der Positionsbestimmung im Umkreis der selbstfahrenden Baumaschine aufgestellt. Wenn sich die Baumaschine im Gelände bewegt, muss die Referenzstation umgesetzt werden, da die Reichweite für eine Funkverbindung zwischen der DGNSS-Rover-Einheit und der Referenzstation begrenzt ist und sich die Genauigkeit der Positionsbestimmung mit zunehmendem Abstand von Rover-Einheit und Referenzstation verringert.

In der Praxis wird eine Referenzstation im Gelände an einem bestimmten Referenzstation-Aufstellpunkt aufgestellt, der bei der Planung der Baustelle zuvor festgelegt worden ist und dessen Positionsdaten bekannt sind. Bei der Baustellenplanung werden im Allgemeinen mehrere Referenzstation-Aufstellpunkte festgelegt, welche im Umkreis des Pfades liegen, entlang dessen sich die selbstfahrende Baumaschine bewegen soll. Ein Geodät bestimmt die Position des Referenzstation-Aufstellpunktes im Gelände mit einem konventionellen Vermessungsverfahren und markiert den Referenzstation-Aufstellpunkt mit einem Vermarkungselement, so dass der Referenzstation-Aufstellpunkt später wieder aufgefunden werden kann.

Vor Beginn der eigentlichen Bauarbeiten wird im Allgemeinen eine Referenzstation an dem ersten Referenzstation-Aufstellpunkt aufgestellt, welche später umgesetzt wird. Wenn mehrere Referenzstationen zur Verfügung stehen, können aber auch an mehreren Referenz-Aufstellpunkten Referenzstationen aufgestellt werden.

Obwohl die Referenzstations-Aufstellpunkte von dem Geodäten zuvor im Gelände markiert worden sind, kann sich in der Praxis das Auffinden der Referenzstations-Aufstellpunkte als schwierig erweisen, wenn die Markierungselemente nur schwer zu erkennen sind. Die Markierungselemente können von Baukörpern, Bäumen oder Sträuchern verdeckt sein. Dabei wird das Auffinden der Markierungselemente mit zunehmender Entfernung der Referenzstations-Aufstellpunkte von der selbstfahrenden Baumaschine immer schwieriger.

Der Erfindung liegt die Aufgabe zugrunde, eine selbstfahrende Baumaschine mit einem von Laufwerken getragenen Maschinenrahmen und einer Arbeitseinrichtung zur Bearbeitung des Bodens oder der Errichtung von Baukörpern auf einem Gelände und eine Anordnung umfassend eine derartige selbstfahrende Baumaschine und ein mobiles Endgerät zu schaffen, welche das Auffinden der markierten Referenzstations-Aufstellpunkte erleichtert. Darüber hinaus ist eine Aufgabe der Erfindung ein Verfahren bereitzustellen, welches das Auffinden eines Referenzstations-Aufstellpunktes einer im Umkreis einer selbstfahrenden Baumaschine aufzustellenden Referenzstation erleichtert.

Die Lösung dieser Aufgaben erfolgt erfindungsgemäß mit den Merkmalen der unabhängigen Patentansprüche. Die Gegenstände der abhängigen Ansprüche betreffen bevorzugte Ausführungsformen der Erfindung.

Nachfolgend wird unter einem Referenzstations-Aufstellpunkt eine bestimmte räumliche Stelle im Gelände verstanden, an welcher eine Referenzstation im Umkreis einer selbstfahrenden Baumaschine aufgestellt ist oder werden soll, welche sich entlang eines vorgegebenen Pfades im Gelände bewegt oder bewegen soll. Unter einem vorgegebenen Pfad wird nicht verstanden, dass die Baumaschine autonom fahren muss. Die Baumaschine kann auch von dem Maschinenführer gesteuert werden. Die Position eines Referenzstations-Aufstellpunktes auf der Oberfläche des Geländes wird von Referenzstations-Positionsdaten beschrieben. Die Positionsdaten können geographische Koordinaten sein, mit denen sich die Lage eines Punktes auf der Erdoberfläche beschreiben lassen. Ein Referenzstations-Positionsdatensatz umfasst die Positionsdaten von mehreren, d. h. mindestens zwei Referenzstations-Aufstellpunkten.

Die nachfolgend beschriebenen Ausführungsformen der Erfindung können eines oder mehrere der nachfolgend genannten Merkmale oder Merkmalskombinationen umfassen. Ein mit einem unbestimmten Artikel bezeichnetes Merkmal kann auch mehrfach vorhanden sein, wenn der unbestimmte Artikel nicht mit einem ausdrücklichen Hinweis auf eine nur einmalige Verwendung zu verstehen ist. Eine Bezeichnung von Merkmalen mit einem Zahlwort, beispielsweise "erstes und zweites", schließt nicht aus, dass über die durch das Zahlwort angegebene Anzahl hinaus diese Merkmale noch weitere Male vorhanden sein können. Bei der Beschreibung sämtlicher Ausführungsformen ist der Ausdruck "kann" auch als "vorzugsweise" oder "zweckmäßigerweise" zu verstehen.

Die erfindungsgemäße selbstfahrende Baumaschine verfügt über eine DGNSS-Rover-Einheit zum Empfangen von Satellitensignalen eines globalen Navigationssatellitensystems und von Korrektursignalen einer im Umkreis der selbstfahrenden Baumaschine aufzustellenden Referenzstation, wobei die DGNSS-Rover-Einheit eine Rechen- und Auswerteeinheit aufweist, welche derart konfiguriert ist, dass auf der Grundlage der Satellitensignale und der Korrektursignale der Referenzstation die Position eines Baumaschinen-Referenzpunktes auf der Baumaschine beschreibende Baumaschinen-Positionsdaten in einem von der Baumaschine unabhängigen Koordinatensystem bestimmt werden.

Unter einer DGNSS-Rover-Einheit wird eine Einheit der selbstfahrenden Baumaschine verstanden, welche die Position der Baumaschine bestimmen kann. Die DGNSS-Rover-Einheit kann über eine GPS-Antenne verfügen, welche an dem Baumaschinen-Referenzpunkt angeordnet sein kann, so dass die GPS-Antenne die Satellitensignale empfangen kann. Die DGNSS-Rover-Einheit kann auch zwei GPS-Antennen umfassen, um nicht nur die Position der Baumaschine, sondern auch deren Orientierung im Gelände bestimmen zu können. Die DGNSS-Rover-Einheit kann eine oder mehrere Komponenten oder Baugruppen der selbstfahrenden Baumaschine zumindest teilweise umfassen. Beispielsweise kann zumindest ein Teil der Rechen- und Auswerteeinheit der DGNSS-Rover-Einheit Bestandteil einer zentralen Rechen- und Auswerteeinheit der selbstfahrenden Baumaschine sein. Die DGNSS-Rover-Einheit kann aber auch eine selbständige Einheit bilden.

Die Rechen- und Auswerteeinheit der DGNSS-Rover-Einheit kann beispielsweise einen allgemeinen Prozessor, einen digitalen Signalprozessor (DSP) zur kontinuierlichen Bearbeitung digitaler Signale, einen Mikroprozessor, eine anwendungsspezifische integrierte Schaltung (ASIC), einen aus Logikelementen bestehenden integrierten Schaltkreis (FPGA) oder andere integrierte Schaltkreise (IC) oder Hardware-Komponenten aufweisen. Auf den Hardware-Komponenten kann ein Datenverarbeitungsprogramm (Software) laufen. Es ist auch eine Kombination der verschiedenen Komponenten möglich.

Die Rechen- und Auswerteeinheit der DGNSS-Rover-Einheit weist einen Referenzstations-Positionsdaten-Speicher zum Speichern eines Referenzstations-Positionsdaten enthaltenen Referenzstations-Positionsdatensatzes auf, wobei die Referenzstations-Positionsdaten jeweils den Referenzstations-Aufstellpunkt einer Referenzstation einer Mehrzahl von im Umkreis eines Pfades, auf dem sich die selbstfahrende Baumaschine bewegt, aufzustellenden Referenzstationen beschreiben. In diesem Zusammenhang werden unter einem Referenzstations-Positionsdaten-Speicher sämtliche Datenspeicher verstanden, mit denen ein Referenzstations-Positionsdatensatz zumindest kurzeitig gespeichert werden kann, um einer weiteren Datenverarbeitung mit der Rechen- und Auswerteeinheit zur Verfügung zu stehen.

Die Referenzstations-Positionsdaten können auch Daten sein, welche erst während der Ausführung der Bauarbeiten ermittelt und gespeichert werden, beispielsweise wenn nachträglich ein neuer Referenzstations-Aufstellpunkt festgelegt wird, da sich ein bei der Planung vorgegebener Referenzstations-Aufstellpunkt beispielsweise wegen einer Abschattung als nicht geeignet erweisen sollte.

Dem Referenzstations-Positionsdaten-Speicher kann eine Schnittstelle zum Importieren von Referenzstations-Positionsdaten aus einer externen Datenquelle zugeordnet sein. Die Schnittstelle kann beispielsweise eine USB-Schnittstelle sein, wobei die Datenquelle ein USB-Sick sein kann. Die Referenzstations-Positionsdaten können auch über ein Mobilfunknetz, einen WLAN oder Bluetooth übertragen werden. Beispielsweise kann der Referenzstations-Positionsdatensatz auf einem externen Server (Cloud) bereitgestellt werden. Der Referenzstations-Positionsdatensatz kann beispielsweise auch per E-Mail versendet werden.

Die Rechen- und Auswerteeinheit der DGNSS-Rover-Einheit ist derart konfiguriert, dass für den in dem Referenzstations-Positionsdaten-Speicher gespeicherten Referenzstations-Positionsdatensatz ein maschinenlesbarer Datensatz erzeugt wird oder mehrere maschinenlesbare Datensätze erzeugt werden.

Unter einem maschinenlesbaren Datensatz wird ein Datensatz verstanden, der dazu bestimmt und geeignet ist, einen Referenzstations-Positionsdatensatz an ein von der Baumaschine getrenntes Gerät zu übertragen und dem Gerät (Maschine) in einer automatisiert auslesbaren Form zur Verfügung stehen.

Das Grundprinzip der Erfindung liegt darin, dem Bedienpersonal, das mit der Aufstellung der Referenzstation oder der Referenzstationen betraut ist, Informationen über die Lage des Referenzstations-Referenzpunktes einfach, sicher und schnell zur Verfügung zu stellen, welcher mit einem mobilen Endgerät, das nicht Bestandteil der selbstfahrenden Baumaschine ist, eingelesen werden kann. Das mobile Endgerät erlaubt dann die Verarbeitung dieser Informationen unabhängig vom Standort der Baumaschine, wodurch das Auffinden des Referenzstations-Referenzpunktes im Gelände erleichtert wird. Mobile Endgeräte können Mobiltelefone, insbesondere smarte Mobiltelefone (Smartphone), Laptops, Tablets oder dergleichen sein. Mobile Endgeräte können auch NFC (Near Field Communication(Nahfeldkommunikations))-Lesegeräte sein, welche auf der RFID (*Radio-Frequency Identification)*-Technik basieren. Für die Signalübertragung können auch drahtlose Verbindungsprotokolle für den Nahbereich, beispielsweise Bluetooth, Verwendung finden.

Bei einer Ausführungsform der erfindungsgemäßen selbstfahrenden Baumaschine ist der maschinenlesbare Datensatz ein maschinenlesbarer Code, insbesondere QR-Code, ist, und der DGNSS-Rover-Einheit ist ein Display zugeordnet, wobei die DGNSS-Rover-Einheit derart konfiguriert ist, dass der eine maschinenlesbare Code auf dem Display bzw. mindestens einer der mehreren maschinenlesbaren Codes auf dem Display dargestellt wird.

Ein QR-Code ist als öffentlicher Standard etabliert (Wikipedia). Der QR-Code besteht aus einer quadratischen Matrix aus schwarzen und weißen Quadraten oder Punkten, mit denen die kodierten Positionsdaten binär dargestellt werden.

Unter einem Display werden sämtliche Vorrichtungen zur Visualisierung von Informationen verstanden. Auf dem Display kann nur ein einziger QR-Code dargestellt werden, mit welchem die Referenzstations-Positionsdaten kodiert sind, welche die Position einer einzigen Referenzstation beschreiben. Auf einem einzigen Display können die QR-Codes mehrerer Referenzstationen nacheinander dargestellt werden. Auf einem einzigen Display können aber auch mehrere QR-Codes gleichzeitig dargestellt werden, mit welchen die Referenzstations-Positionsdaten mehrerer Referenzstationen kodiert sind, welche die Positionen mehrerer Referenzstationen beschreiben. Es können auch mehrere Displays vorgehen sein, auf denen QR-Codes dargestellt werden. Das Display kann im Bereich des Bedienerstandes und/oder. an einem anderen leicht für das Bedienpersonal zugänglichen Ort der Baumaschine vorgesehen sein.

Eine Ausführungsform des erfindungsgemäßen selbstfahrenden Baumaschine sieht vor, dass die Rechen- und Auswerteeinheit der DGNSS-Rover-Einheit derart konfiguriert ist, dass für sämtliche in dem Referenzstations-Positionsdaten-Speicher gespeicherten Referenzstations-Positionsdaten des Referenzstations-Positionsdatensatzes jeweils ein die Referenzstations-Positionsdaten der jeweiligen Referenzstation enthaltener maschinenlesbarer Code erzeugt wird, und dass die Rechen- und Auswerteeinheit derart konfiguriert ist, dass die maschinenlesbaren Codes sämtlicher Referenzstations-Positionsdaten auf dem Display dargestellt werden.

Bei einer bevorzugten Ausführungsform ist die Rechen- und Auswerteeinheit derart konfiguriert, dass ein QR-Code erzeugt wird, welcher eine URL (Uniform Resource Locator) einer Website enthält. Folglich können zum Auffinden des Referenzstations-Aufstellpunktes sämtliche Dienste genutzt werden, die im Internet durch Aufrufen einer Website mit der Eingabe der URL in einen Browser bzw. Starten einer Applikation (App) zur Verfügung stehen. Geeignete Websites bzw. Apps sind weit verbreitet.

Die Erfindung betrifft auch eine Anordnung umfassend eine derartige selbstfahrende Baumaschine, welche einen von Laufwerken getragenen Maschinenrahmen und eine Arbeitseinrichtung zur Bearbeitung des Bodens oder der Errichtung von Baukörpern auf einem Gelände aufweist, und ein mobiles Endgerät. Das mobile Endgerät zeichnet sich dadurch aus, dass auf dem Endgerät ein Online-Kartendienst verfügbar ist, der eine leichte Lokalisierung des Referenzstations-Aufstellpunktes auf einer Karte erlaubt. Der Online-Kartendienst kann mit einer auf dem mobilen Endgerät installierten Applikation zur Verfügung gestellt werden, welche nach dem Einlesen des QR-Codes automatisch gestartet wird. Derartige mobile Endgeräte gehören zum Stand der Technik und stehen als Smartphone dem Bedienpersonal im Allgemeinen zur Verfügung.

Eine bevorzugte Ausführungsform sieht vor, dass auf dem mobilen Endgerät ein Online-Kartendienst mit einer Navigationsfunktion installiert ist, welche dem Bedienpersonal nicht nur die einfache, schnelle und sichere Lokalisierung des Referenzstations-Aufstellpunktes auf einer Karte erlaubt, sondern das Bedienpersonal mit dem mobilen Endgerät auch zu dem Referenzstations-Aufstellpunktes führt.

Das erfindungsgemäße Verfahren zum Auffinden der Position eines Referenzstations-Aufstellpunktes einer im Umkreis einer selbstfahrenden Baumaschine aufzustellenden Referenzstation umfasst die folgenden Verfahrensschritte:
Importieren eines Referenzstations-Positionsdatensatzes aus einer externen Datenquelle in einen Referenzstations-Positionsdaten-Speicher, wobei die Referenzstations-Positionsdaten jeweils den Referenzstations-Aufstellpunkt einer Referenzstation einer Mehrzahl von im Umkreis eines Pfades, auf dem sich die selbstfahrende Baumaschine bewegt, aufzustellenden Referenzstationen beschreiben, und
Erstellen eines maschinenlesbaren Datensatzes oder mehrerer maschinenlesbarer Datensätze für den in dem Referenzstations-Positionsdaten-Speicher gespeicherten Referenzstations-Positionsdatensatz mit der Rechen- und Auswerteeinheit.

Der maschinenlesbare Datensatz kann ein maschinenlesbarer Code, insbesondere ein QR-Code sein, wobei das Verfahren ferner die folgenden Verfahrensschritte umfassen kann:
Darstellen des einen maschinenlesbaren Codes oder Darstellen mindestens eines maschinenlesbaren Codes der mehreren maschinenlesbaren Codes auf einem der DGNSS-Rover-Einheit zugeordneten Display, und
Einlesen des einen maschinenlesbaren Codes oder mindestens eines maschinenlesbaren Codes der mehreren maschinenlesbaren Codes mit einem mobilen Endgerät, insbesondere Smartphone.

Für sämtliche in dem Referenzstations-Positionsdaten-Speicher gespeicherten Referenzstations-Positionsdaten des Referenzstations-Positionsdatensatzes kann jeweils ein die Referenzstations-Positionsdaten der jeweiligen Referenzstation enthaltener QR-Code erzeugt werden. Auf dem Display können sämtliche Referenzstations-Positionsdaten dargestellt werden.

Eine bevorzugte Ausführungsform des erfindungsgemäßen Verfahrens sieht vor, dass auf dem mobilen Endgerät, insbesondere Smartphone, ein Online-Kartendienst zum Auffinden des Referenzstations-Aufstellpunktes im Gelände, insbesondere ein Online-Kartendienst mit einer Navigationsfunktion, installiert ist.

Der maschinenlesbare Datensatz oder mindestens einer der mehreren maschinenlesbaren Datensätze kann auch mit einer Sendeeinheit, insbesondere einer auf der RFID-Technik basierende NFC-Sendeeinheit, an ein mobiles Endgerät gesendet werden.

Nachfolgend werden Ausführungsbeispiele der Erfindung unter Bezugnahme auf die Zeichnungen im Einzelnen beschrieben.

Es zeigen:
- Fig. 1: eine selbstfahrende Baumaschine in der Seitenansicht,
- Fig. 2: die selbstfahrende Baumaschine von Fig. 1 in der Draufsicht,
- Fig. 3: die DGNNS-Rover-Einheit der selbstfahrenden Baumaschine und die Referenzstation in vereinfachter schematischer Darstellung,
- Fig. 4: die sich entlang eines Pfades bewegende selbstfahrende Baumaschine, wobei die Referenzstation an einer ersten Position aufgestellt ist,
- Fig. 5: die sich entlang eines Pfades bewegende selbstfahrende Baumaschine, wobei die Referenzstation an einer zweiten Position aufgestellt ist,
- Fig. 6: die sich entlang eines Pfades bewegende selbstfahrende Baumaschine, wobei die Referenzstation an einer dritten Position aufgestellt ist,
- Fig. 7: die sich entlang eines Pfades bewegende selbstfahrende Baumaschine, wobei die Referenzstation an einer vierten Position aufgestellt ist,
- Fig. 8: eine Bildschirmansicht des an der selbstfahrenden Baumaschine vorgesehenen Displays mit der Darstellung der QR-Codes der Referenzstations-Aufstellpunkte, und
- Fig. 9: einen alternative Ausführungsform der DGNNS-Rover-Einheit der selbstfahrenden Baumaschine.

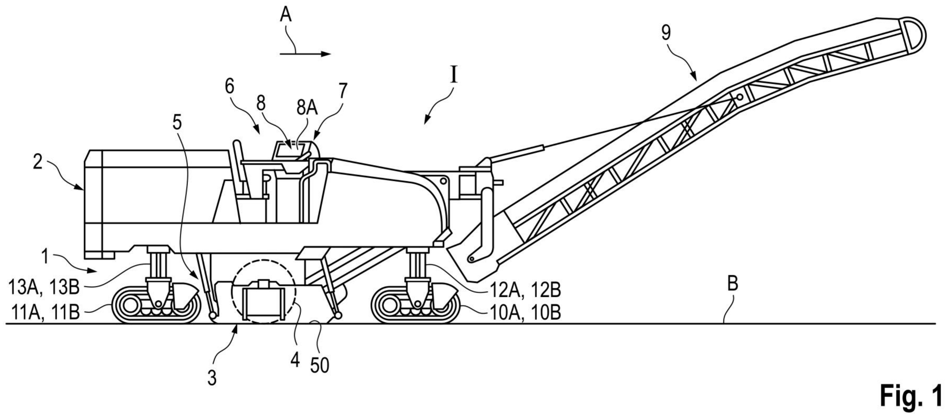

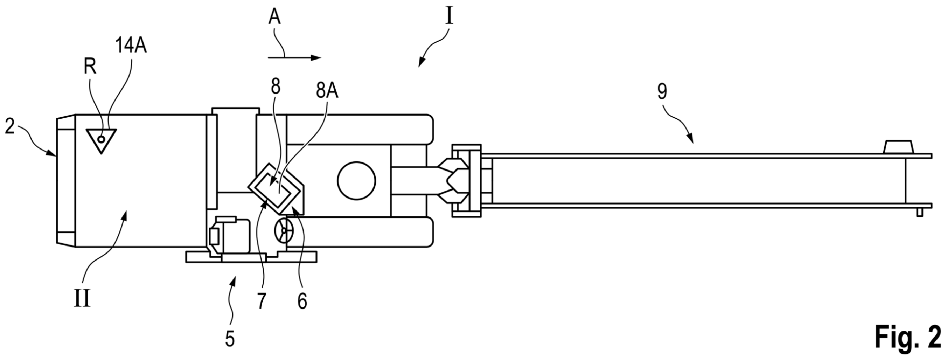

Die Figuren 1 und 2 zeigen in der Seitenansicht und der Draufsicht als Beispiel für eine selbstfahrende Baumaschine I eine Straßenfräsmaschine zum Abfräsen von Straßenbelägen, bei der es sich um eine Frontlader-Straßenfräsmaschine handelt.

Die Baumaschine I verfügt über einen von einem Fahrwerk 1 getragenen Maschinenrahmen 2, an dem eine Arbeitseinrichtung 3 angeordnet ist, mit der die für die Baumaßnahme erforderlichen Arbeiten durchgeführt werden können. Die Arbeitseinrichtung 3 weist eine in Fig. 1 nur andeutungsweise dargestellte Fräswalze 4 auf, die in einem Fräswalzengehäuse 5 angeordnet ist. Das Fräswalzengehäuse 5 ist an beiden Seiten von einem Kantenschutz 50 verschlossen. Oberhalb des Fräswalzengehäuses 5 befindet sich am Maschinenrahmen ein Bedienerstand 6 mit einem Bedienpult 7 für den Maschinenführer. Das Bedienpult 7 umfasst eine Anzeigeeinheit 8 mit einem Display 8A, das als Touchscreen ausgebildet sein kann.

Die selbstfahrende Baumaschine I kann in Arbeitsrichtung A ein vorderes linkes Laufwerk 10A und ein vorderes rechtes Laufwerk 10B und ein hinteres linkes Laufwerk 11A und ein hinteres rechtes Laufwerk 11B aufweisen, denen eine in Arbeitsrichtung A vordere, linke und rechte Hubeinrichtung 12A, 12B und hintere, linke und rechte Hubeinrichtung 13A, 13B zugeordnet sind, so dass durch Einfahren bzw. Ausfahren der Hubeinrichtungen die Höhe und Neigung des Maschinenrahmens 2 gegenüber der Bodenoberfläche B verändert werden kann. Weiterhin kann die selbstfahrende Baumaschine I über eine Transporteinrichtung 9 zum Abtransport von gefrästem Material verfügen.

Die Steuerung der Baumaschine I erfolgt mit einer in den Figuren nicht dargestellten zentralen Steuer- und Recheneinheit in Abhängigkeit von Baumaschinen-Positionsdaten, die die Position eines Referenzpunktes R auf der Baumaschine in einem von der Baumaschine unabhängigen Koordinatensystem beschreiben. Zur Bestimmung der Position eines Referenzpunktes R auf der Baumaschine I ist ein Positionsbestimmungssystem II vorgesehen, dessen Aufbau und Funktion nachfolgend im Einzelnen beschrieben wird.

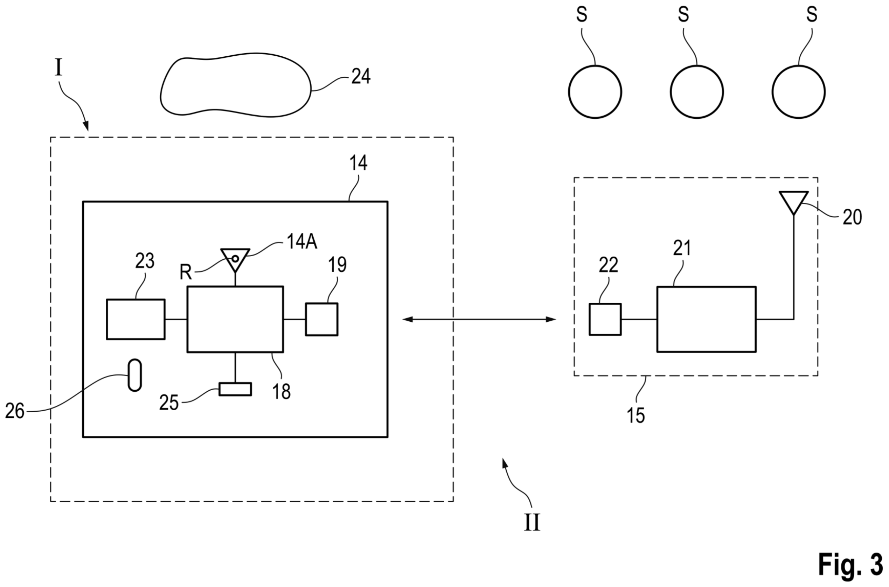

Fig. 3 zeigt eine vereinfachte schematische Darstellung des Positionsbestimmungssystems II, das eine GNSS-Rover-Einheit 14 und eine Referenzstation 15 umfasst. Die GNSS-Rover-Einheit 14 ist an der in strichelten Linien nur andeutungsweise dargestellten Baumaschine I vorgesehen, so dass sich die GNSS-Rover-Einheit 14 mit der Baumaschine I im Gelände bewegt, während die Referenzstation 15 im Umkreis der Baumaschine aufgestellt wird.

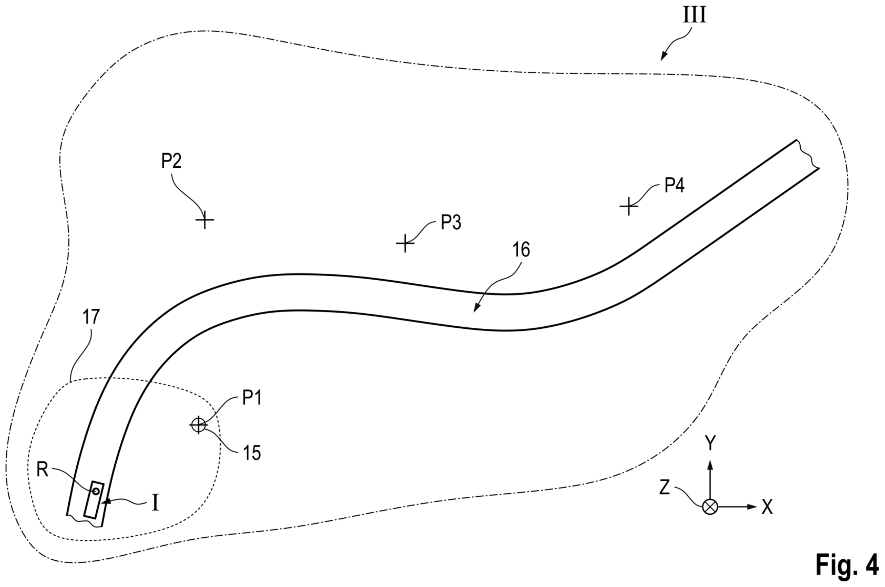

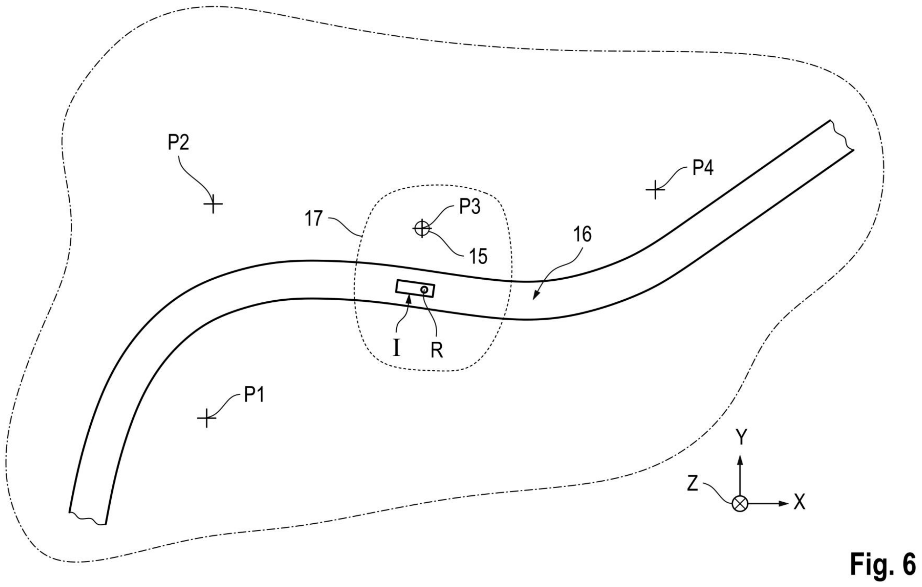

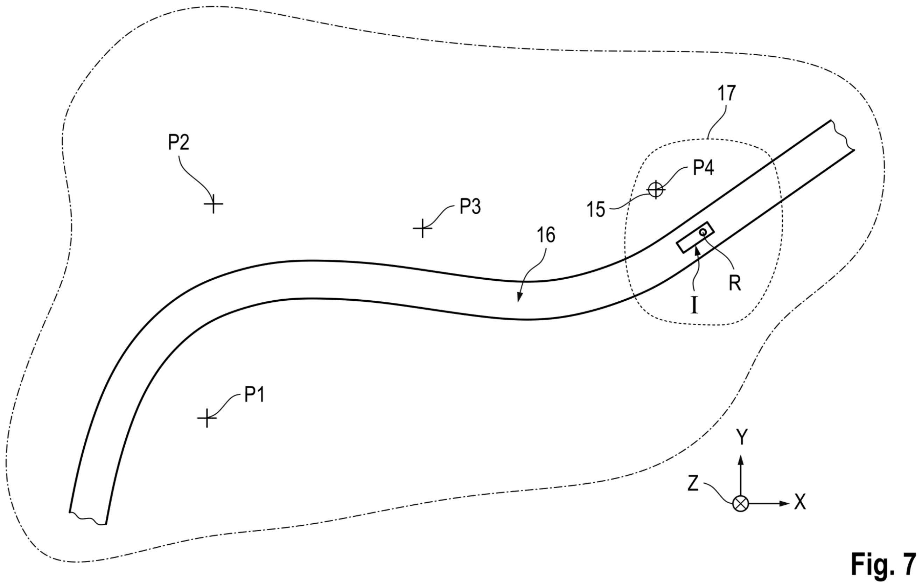

Die Figuren 4 bis 7 zeigen die Bewegung der Baumaschine I, insbesondere Straßenfräsmaschine, im Gelände entlang eines vorgegebenen Pfades 16, insbesondere einer Straße. Die Aufstellorte für die Referenzstation entlang des vorgegebenen Pfades 16 werden grundsätzlich bei der Planung der Baustelle vorgegeben. Nachfolgend werden diese Aufstellorte auch als Referenzstations-Aufstellpunkte P1, P2, P3 und P4 bezeichnet. Die Positionen der Referenzstations-Aufstellpunkte auf der Erdoberfläche werden durch geografische Koordinaten (Kugelkoordinaten) beschrieben, welche in verschiedenen Zahlenformaten angegeben werden können. Bei dem vorliegenden Ausführungsbeispiel werden die Positionen der Referenzstations-Aufstellpunkte im Gelände durch Latidude (φ) und Longitude (Δ) in dezimaler Form beschrieben.

Bei der Planung der Baustelle werden für sämtliche Referenzstationen, die entlang des Pfades aufgestellt werden sollen, die Referenzstations-Positionsdaten (Latidude (φ) und Longitude (Δ) ermittelt, welche die Position des Referenzstations-Aufstellpunktes P1, P2, P3 oder P4 der jeweiligen Referenzstation beschreiben. Diese Referenzstations-Positionsdaten werden in einem Referenzstations-Positionsdatensatz zusammengefasst, welcher einem Geodäten und der Steuerung der Baumaschine zur Verfügung gestellt werden soll.

Vor Beginn der eigentlichen Bauarbeiten werden die Positionen der Referenzstations-Aufstellpunkte P1, P2, P3 und P4 im Gelände von einem Geodäten mit einem konventionellen Vermessungsverfahren bestimmt und die Referenzstations-Aufstellpunkte P1, P2, P3 und P4 werden mit einem Vermarkungselement gekennzeichnet, um für das Aufstellen der Referenzstation später wieder aufgefunden werden zu können. In den Figuren 4 bis 7 sind die Referenzstations-Aufstellpunkte P1, P2, P3 und P4 für die Referenzstation mit einem Kreuz gekennzeichnet, an denen die Referenzstation 15 aufgestellt werden soll.

Während sich die Baumaschine I entlang des Pfades 16 bewegt, wird die Referenzstation 15 mehrfach umgesetzt, so dass sich die Referenzstation immer in einem Umkreis 17 der Baumaschine I befindet, welcher einen bestimmten Radius nicht überschreiten sollte.

Die DGNSS-Rover-Einheit 14 umfasst mindestens eine GPS-Antenne 14A die an dem Referenzpunkt R der Baumaschine I angeordnet ist (Fig. 2), eine Rechen- und Auswerteeinheit 18 und eine bidirektionale Sende- und Empfangseinheit 19 (Fig. 3). Die Referenzstation 15 weist eine GPS-Antenne 20, eine Rechen- und Auswerteeinheit 21 und eine bidirektionale Sende- und Empfangseinheit 22 auf. DGNSS-Rover-Einheit 14 und Referenzstation 15 kommunizieren mittels der Sende- und Empfangseinheiten 19, 22, die stellvertretend für die bekannten Übertragungsstrecken stehen sollen, die nach den bekannten Übertragungsverfahren arbeiten können (RF-Sender/Empfänger, WLAN, Bluetooth, etc.).

Die GPS-Antenne 20 der Referenzstation 15 empfängt die Satellitensignale mehrerer Satelliten wenigstens eines Satellitennavigationssystems S, wobei deren Rechen- und Auswerteeinheit 21 derart konfiguriert ist, dass aus den Satellitensignalen die Position der Referenzstation 15 in einem von der Baumaschine unabhängigen Koordinatensystem mit einer dem GPS-System entsprechenden Genauigkeit bestimmt wird. Diese Position wird als die von der Referenzstation bestimmte oder gemessene Referenzstations-Position bezeichnet. Die Rechen- und Auswerteeinheit 21 der Referenzstation 15 ist weiterhin derart konfiguriert, dass Korrektursignale nach den bekannten Verfahren auf der Grundlage der tatsächlichen Referenzstations-Position und der von der Referenzstation bestimmten Referenzstations-Position berechnet werden, wozu neben der gemessenen Referenzstations-Position noch die tatsächliche Referenzstations-Position bekannt sein muss. Diese entspricht der bekannten Position des vorgegebenen Referenzstations-Aufstellpunktes.

Die DGNSS-Rover-Einheit 14 empfängt ebenfalls die Satellitensignale mehrerer Satelliten eines globalen Navigationssatellitensystems S mittels der GPS-Antenne 14A. Darüber hinaus empfängt die DGNSS-Rover-Einheit 14 die Korrektursignale der Referenzstation 15 mittels der Sende-Empfangseinheit 19. Die Rechen- und Auswerteeinheit 18 der GNSS-Rover-Einheit 14 ist derart konfiguriert, dass nach den bekannten Verfahren auf der Grundlage der Satellitensignale und der Korrektursignale die (genaue) Position des Referenzpunktes R auf der Baumaschine I beschreibende Baumaschinen-Positionsdaten in dem von der Baumaschine unabhängigen Koordinatensystem (X, Y, Z) mit einer höheren Genauigkeit bestimmt wird.

Darüber hinaus weist die DGNSS-Rover-Einheit 14 einen Referenzstations-Positionsdaten-Speicher 23 auf, in dem der die Referenzstations-Positionsdaten enthaltener Referenzstations-Positionsdatensatz gespeichert ist.

Der bei der Planung erstellte Referenzstations-Positionsdatensatz wird bei dem vorliegenden Ausführungsbeispiel in einer externen Datenquelle 24, insbesondere einem externen Server, bereitgestellt und wird über eine dem Referenzstations-Positionsdaten-Speicher 23 zugeordnete Schnittstelle 25 in den Referenzstations-Positionsdaten-Speicher 23 eingelesen.

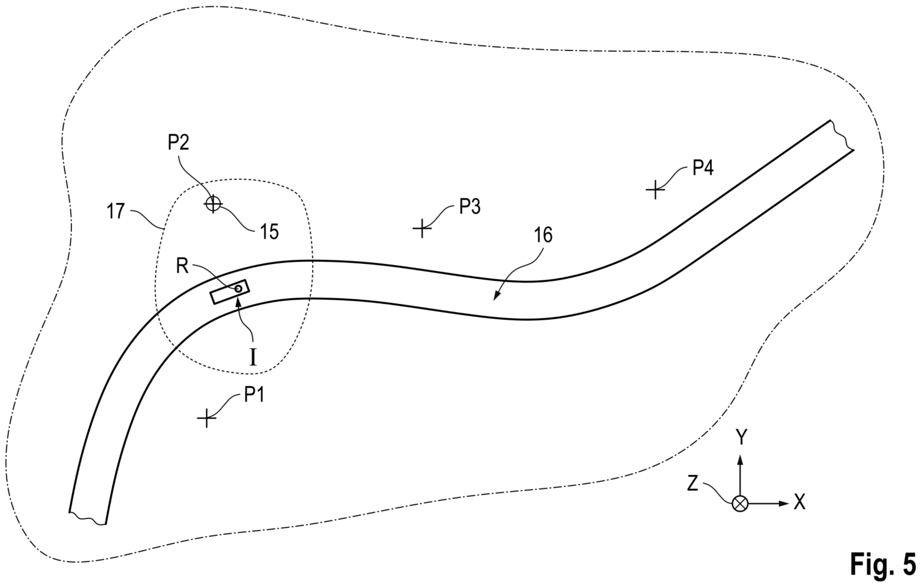

Vor Beginn der eigentlichen Bauarbeiten wird eine Referenzstation 15 an dem ersten Referenzstations-Aufstellpunkt aufgestellt. Hierzu muss das Bedienpersonal den zuvor im Gelände markierten Referenzstations-Aufstellpunkt P1 auffinden können (Fig. 4). Während der Bauarbeiten wird die Referenzstation 15 mehrfach umgesetzt. Hierzu muss das Bedienpersonal die anderen Referenzstations-Aufstellpunkte P2, P3 und P4 (Figuren 5 bis 7) auffinden können.

Bei dem vorliegenden Ausführungsbeispiel liest die Rechen- und Auswerteeinheit 18 der DGNSS-Rover-Einheit 14 den Referenzstations-Positionsdatensatz mit den Referenzstations-Positionsdaten sämtlicher Referenzstations-Aufstellpunkte P1, P2, P3 und P4 (Latidude (φ) und Longitude (Δ)) aus dem Referenzstations-Positionsdaten-Speicher 23 aus. Die Rechen- und Auswerteeinheit 18 der DGNSS-Rover-Einheit 14 ist derart konfiguriert, dass für sämtliche Referenzstations-Positionsdaten ein QR-Code erstellt wird, der die jeweiligen Referenzstations-Positionsdaten enthält. Bei dem vorliegenden Ausführungsbeispiel ist der DGNSS-Rover-Einheit 14 das Display 8A der Anzeigeeinheit 8 am Bedienpult 7 der selbstfahrenden Baumaschine zugeordnet. Der DGNSS-Rover-Einheit 14 kann auch ein anderes Display zugeordnet sein, dass sich nicht am Bedienerstand 6, sondern beispielsweise an einer Seite des Maschinenrahmens 2 befindet, um für das Bedienpersonal leicht zugänglich zu sein. Die Rechen- und Auswerteeinheit 18 der DGNSS-Rover-Einheit 14 ist derart konfiguriert, dass sämtliche QR-Codes auf dem Display dargestellt werden.

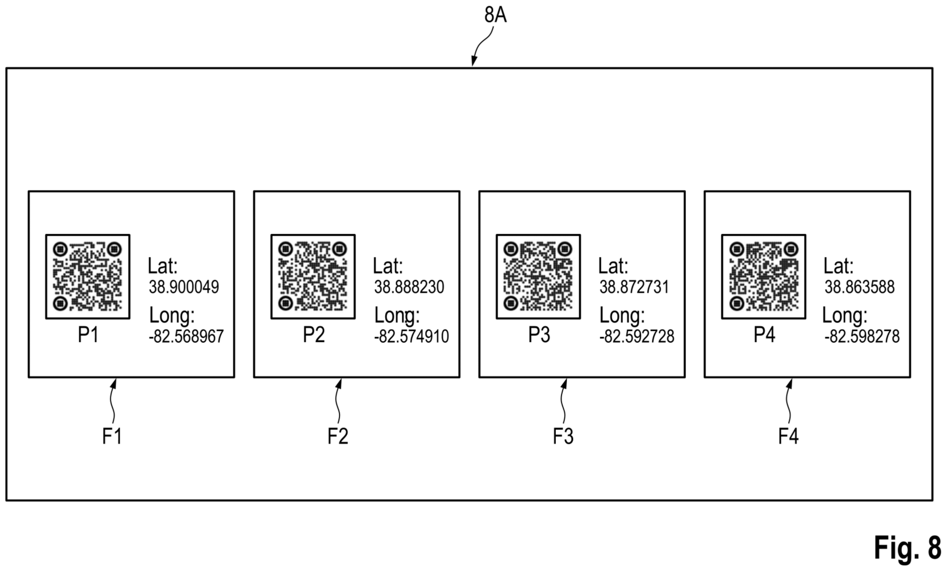

Fig. 8 zeigt die Bildschirmansicht des an der selbstfahrenden Baumaschine vorgesehenen Displays (8A). Auf dem Display (8A) werden vier Felder F1, F2, F3 und F4 dargestellt, wobei jedem Feld ein Referenzstations-Aufstellpunkt P1, P2, P3 und P4 zugeordnet ist. In den Feldern F1, F2, F3 und F4 werden die geografischen Koordinaten der jeweiligen Referenzstations-Aufstellpunkte P1, P2, P3 und P4 (Latidude (φ) und Longitude (Δ)) in dezimaler Form angegeben. Neben den geografischen Koordinaten wird der entsprechende QR-Code gezeigt, welcher die geografischen Koordinaten enthält.

Die Rechen- und Auswerteeinheit 18 der DGNSS-Rover-Einheit 14 ist derart konfiguriert, dass für die Referenzstations-Aufstellpunkte P1, P2, P3 und P4 jeweils ein QR-Code erzeugt wird, der die URL einer Website enthält. Dies wird nachfolgend unter Bezugnahme auf den ersten Referenzstations-Aufstellpunkt P1 illustriert.

In dem ersten Feld F1 werden die geografischen Koordinaten für den ersten Referenzstations-Aufstellpunkt P1 wie folgt angezeigt:

| | | |
|---|---|---|
| Lat: | 38.900049 | (Latidude (φ)) |
| Lng: | -82.568967 | (Longitude (Δ)) |

Die obigen Angaben können auch in einem Sexagesimalformat wie folgt angegeben werden:
38°54'00.2"N 82°34'08.3"W

Folglich werden dem Bedienpersonal die Positionsdaten in einer lesbaren Form zur Verfügung gestellt.

In dem QR-Code des ersten Feldes F1 ist die folgende Information decodiert:
Google.de/maps/?q=38.900049,-82.568967

Bei der obigen Information handelt es sich um die in einen Browser einzugebende Zeichenfolge zum Aufrufen einer Website (URL). Folglich kann das Bedienpersonal den ersten Referenzstations-Aufstellpunkt P1 leicht mit einem mobilen Endgerät 26, insbesondere einem Smartphone auffinden, auf dem ein Online-Kartendienst mit einer Navigationsfunktion, beispielsweise Google Maps des Unternehmens Goggle LLC, installiert ist. Zum Aufrufen dieses Kartendienstes liest das Bedienpersonal mit dem Smartphone 26 den ersten QR-Code. Hierzu steht dem Bedienpersonal beispielsweise die Kamerafunktion des Smartphones zur Verfügung, die im Allgemeinen auch das Lesen eines QR-Codes erlaubt. Nach dem Lesen des QR-Codes öffnet sich eine Karte, die von dem Kartendienst, bereitgestellt wird, in welcher die Position des Referenzstations-Aufstellpunktes P1 beispielsweise in einem Satellitenbild gezeigt ist. Bei dem vorliegenden Ausführungsbeispiel enthält der Kartendienst auch eine Navigationsfunktion. Das Bedienpersonal kann somit die Navigationsfunktion nutzen, um zu dem Referenzstations-Aufstellpunkt der ersten Referenzstation zu gelangen.

In diesem Zusammenhang wird nachfolgend noch die nach dem Aufstellen der Referenzstation 15 erforderliche Initialisierung der Referenzstation beschrieben, die bei dem vorliegenden Ausführungsbeispiel von der Referenzstation selbst vorgenommen werden kann.

Die Rechen- und Auswerteeinheit 18 der DGNSS-Rover-Einheit 14 und die Rechen- und Auswerteeinheit 21 der Referenzstation 15 sind derart konfiguriert, dass zur Initialisierung der Referenzstation die nachfolgenden Verfahrensschritte durchgeführt werden.

Die an einem Referenzstations-Aufstellpunkt P1, P2, P3 oder P4 aufgestellte Referenzstation 15 empfängt die Satellitensignale S und sendet die gemessenen Positionsdaten mittels der Sende- und Empfangseinheit 22 an die DGNSS-Rover-Einheit 14, welche die von der Referenzstation bestimmte Referenzstations-Position beschreiben (Fig. 3, Figuren 4 bis 7). Diese Positionsdaten werden von der DGNSS-Rover-Einheit 14 mittels der Sende- und Empfangseinheit 19 empfangen. Auf der Grundlage eines Vergleichs der in dem Referenzstations-Datensatz enthaltenen Positionsdaten der Referenzstation mit der von der Referenzstation 15 bestimmten Referenzstations-Position ermittelt die DGNSS-Rover-Einheit 14 die tatsächliche Referenzstations-Position und sendet die die tatsächliche Referenzstations-Position beschreibenden Positionsdaten mittels der Sende- und Empfangseinheit 19 an die Referenzstation 15, welche diese Positionsdaten mittels der Sende- und Empfangseinheit 22 empfängt. Nachdem der Referenzstation 15 ihre tatsächliche Position bekannt ist, berechnet deren Rechen- und Auswerteeinheit 22 die Korrektursignale, die sie an die DGNSS-Rover-Einheit 14 sendet. Die Rechen- und Auswerteeinheit 18 der DGNSS-Rover-Einheit 14 berechnet dann auf der Grundlage der Satellitensignale und der Korrektursignale die die genaue Position des Referenzpunktes R auf der Baumaschine beschreibenden Baumaschinen-Positionsdaten.

Der Vergleich zur Auswahl der zugehörigen Positionsdaten ist in der DE 10 2022 124 484 A1 im Einzelnen beschrieben.

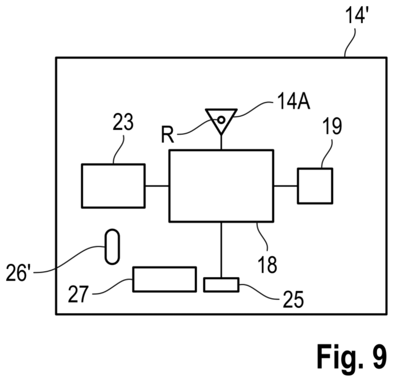

Fig. 9 zeigt eine alternative Ausführungsform der DGNSS-Rover-Einheit 14', die sich von der in Fig. 3 gezeigten DGNSS-Rover-Einheit 14, dadurch unterscheidet, dass die DGNSS-Rover-Einheit 14' über eine auf der RFID-Technik basierende NFC-Sendeeinheit 27 verfügt. In Fig. 9 werden für die einander entsprechenden Teile dieselben Bezugszeichen verwendet. Das mobile Endgerät 26' ist bei der alternativen Ausführungsform ein auf der RFID-Technik basierende NFC-Empfangseinheit (NFC-Lesegerät). Die Übertragung des maschinenlesbaren Datensatzes kann bei der alternativen Ausführungsform dadurch erfolgen, dass das mobile Endgerät 26` in den Nahbereich der NFC-Sendeeinheit 27' gebracht wird. Eine NFC-Empfangseinheit kann Bestandteil eines Smartphones sein, so dass auch bei der alternativen Ausführungsform ein Smartphone zum Auslesen der Daten verwendet werden kann und zur weiteren Datenverarbeitung weitere Funktionen des Smartphones genutzt werden können.

## Patentansprüche

1. Selbstfahrende Baumaschine mit einem von Laufwerken (10A, 10B, 11A, 11B) getragenen Maschinenrahmen (2) und einer Arbeitseinrichtung (3) zur Bearbeitung des Bodens oder der Errichtung von Baukörpern auf einem Gelände, wobei
die selbstfahrende Baumaschine eine DGNSS-Rover-Einheit (14) zum Empfangen von Satellitensignalen eines globalen Navigationssatellitensystems und von Korrektursignalen einer an einer im Umkreis der selbstfahrenden Baumaschine aufzustellenden Referenzstation (15) umfasst, und die DGNSS-Rover-Einheit (14) eine Rechen- und Auswerteeinheit (18) aufweist, welche derart konfiguriert ist, dass auf der Grundlage der Satellitensignale und der Korrektursignale der Referenzstation (15) die Position eines Baumaschinen-Referenzpunktes (R) auf der Baumaschine (I) beschreibende Baumaschinen-Positionsdaten in einem von der Baumaschine unabhängigen Koordinatensystem (X, Y, Z) bestimmt werden, und
die Rechen- und Auswerteeinheit (18) der DGNSS-Rover-Einheit (14) einen Referenzstations-Positionsdaten-Speicher (23) zum Speichern eines Referenzstations-Positionsdaten enthaltenen Referenzstations-Positionsdatensatzes aufweist, wobei die Referenzstations-Positionsdaten jeweils den Referenzstations-Aufstellpunkt einer Referenzstation (15) einer Mehrzahl von im Umkreis eines Pfades (16), auf dem sich die selbstfahrende Baumaschine bewegt, aufzustellenden Referenzstationen beschreiben, und
**dadurch gekennzeichnet, dass**
die Rechen- und Auswerteeinheit (18) der DGNSS-Rover-Einheit (14) derart konfiguriert ist, dass für den in dem Referenzstations-Positionsdaten-Speicher (23) gespeicherten Referenzstations-Positionsdatensatz ein maschinenlesbarer Datensatz erzeugt wird oder mehrere maschinenlesbare Datensätze erzeugt werden.

2. Selbstfahrende Baumaschine nach Anspruch 1, **dadurch gekennzeichnet, dass** der maschinenlesbare Datensatz ein maschinenlesbarer Code, insbesondere QR-Code, ist, und dass der DGNSS-Rover-Einheit (14) ein Display (8A) zugeordnet ist, wobei die DGNSS-Rover-Einheit (14) derart konfiguriert ist, dass der eine maschinenlesbare Code auf dem Display (8A) bzw. mindestens einer der mehreren maschinenlesbaren Codes auf dem Display (8A) dargestellt wird.

3. Selbstfahrende Baumaschine nach Anspruch 2, **dadurch gekennzeichnet,**
**dass** die Rechen- und Auswerteeinheit (18) der DGNSS-Rover-Einheit (14) derart konfiguriert ist, dass für sämtliche in dem Referenzstations-Positionsdaten-Speicher (23) gespeicherten Referenzstations-Positionsdaten des Referenzstations-Positionsdatensatzes jeweils ein die Referenzstations-Positionsdaten der jeweiligen Referenzstation enthaltener maschinenlesbarer Code erzeugt wird, oder
**dass** die Rechen- und Auswerteeinheit (18) der DGNSS-Rover-Einheit (14) derart konfiguriert ist, dass für sämtliche in dem Referenzstations-Positionsdaten-Speicher (23) gespeicherten Referenzstations-Positionsdaten des Referenzstations-Positionsdatensatzes jeweils ein die Referenzstations-Positionsdaten der jeweiligen Referenzstation enthaltener maschinenlesbarer Code erzeugt wird und die Rechen- und Auswerteeinheit (18) der DGNSS-Rover-Einheit (14) derart konfiguriert ist, dass die maschinenlesbaren Codes sämtlicher Referenzstations-Positionsdaten auf dem Display (8A) dargestellt werden.

4. Selbstfahrende Baumaschine nach Anspruch 1, **dadurch gekennzeichnet, dass** der DGNSS-Rover-Einheit (14) eine Sendeeinheit (27), insbesondere eine auf der RFID-Technik basierende NFC-Sendeeinheit, zugeordnet ist, wobei die DGNSS-Rover-Einheit (14) derart konfiguriert ist, dass der eine maschinenlesbare Datensatz oder mindestens einer der mehreren maschinenlesbaren Datensätze mit der Sendeeinheit (27) an ein mobiles Endgerät (26') gesendet wird.

5. Selbstfahrende Baumaschine nach einem der Ansprüche 1 bis 4, **dadurch gekennzeichnet, dass** die Rechen- und Auswerteeinheit (18) der DGNSS-Rover-Einheit (14) derart konfiguriert ist, dass ein maschinenlesbarer Datensatz erzeugt wird, welcher eine URL einer Website enthält.

6. Selbstfahrende Baumaschine nach einem der Ansprüche 1 bis 5, **dadurch gekennzeichnet, dass** dem Referenzstations-Positionsdaten-Speicher (23) eine Schnittstelle (25) zum Importieren von Referenzstations-Positionsdaten aus einer externen Datenquelle (24) zugeordnet ist.

7. Anordnung umfassend eine selbstfahrende Baumaschine mit einem von Laufwerken (10A, 10B, 11A, 11B) getragenen Maschinenrahmen (2) und einer Arbeitseinrichtung (3) zur Bearbeitung des Bodens oder der Errichtung von Baukörpern auf einem Gelände nach einem der Ansprüche 1 bis 6 und ein mobiles Endgerät (26), insbesondere Smartphone, auf dem ein Online-Kartendienst verfügbar ist.

8. Anordnung nach Anspruch 7, **dadurch gekennzeichnet, dass** das mobile Endgerät (26) derart konfiguriert ist, dass der Online-Kartendienst nach dem Einlesen eines QR-Codes aktiviert wird.

9. Anordnung nach Anspruch 8, **dadurch gekennzeichnet, dass** auf dem mobilen Endgerät (26) ein Online-Kartendienst mit einer Navigationsfunktion installiert ist.

10. Verfahren zum Auffinden eines Referenzstations-Aufstellpunktes einer im Umkreis einer selbstfahrenden Baumaschine aufzustellenden Referenzstation, wobei
die Baumaschine (I) einen von Laufwerken (10A, 10B, 11A, 11B) getragenen Maschinenrahmen (2) und eine Arbeitseinrichtung (3) zur Bearbeitung des Bodens oder der Errichtung von Baukörpern auf einem Gelände und eine DGNSS-Rover-Einheit (14) zum Empfangen von Satellitensignalen eines globalen Navigationssatellitensystems und von Korrektursignalen einer im Umkreis der selbstfahrenden Baumaschine aufzustellenden Referenzstation (15) umfasst, und die DGNSS-Rover-Einheit (14) eine Rechen- und Auswerteeinheit (18) aufweist, welche derart konfiguriert ist, dass auf der Grundlage der Satellitensignale und der Korrektursignale der Referenzstation die Position eines Baumaschinen-Referenzpunktes (R) auf der Baumaschine (I) beschreibende Baumaschinen-Positionsdaten in einem von der Baumaschine unabhängigen Koordinatensystem (X, Y, Z) bestimmt werden, mit folgenden Verfahrensschritten:
Importieren eines Referenzstations-Positionsdatensatzes aus einer externen Datenquelle (24) in einen Referenzstations-Positionsdaten-Speicher (23), wobei die Referenzstations-Positionsdaten jeweils den Referenzstations-Aufstellpunkt (P1, P2, P3, P4) einer Referenzstation einer Mehrzahl von im Umkreis eines Pfades (16), auf dem sich die selbstfahrende Baumaschine bewegt, aufzustellenden Referenzstationen beschreiben, und
Erstellen eines maschinenlesbaren Datensatzes oder mehrerer maschinenlesbarer Datensätze für den in dem Referenzstations-Positionsdaten-Speicher (23) gespeicherten Referenzstations-Positionsdatensatz mit der Rechen- und Auswerteeinheit (18).

11. Verfahren nach Anspruch 10, **dadurch gekennzeichnet, dass** der maschinenlesbare Datensatz ein maschinenlesbarer Code, insbesondere ein QR-Code ist, wobei das Verfahren ferner die folgenden Verfahrensschritte umfasst:
Darstellen des einen maschinenlesbaren Codes oder Darstellen mindestens eines maschinenlesbaren Codes der mehreren maschinenlesbaren Codes auf einem der DGNSS-Rover-Einheit (14) zugeordneten Display (8A) und
Einlesen des einen maschinenlesbaren Codes oder mindestens eines maschinenlesbaren Codes der mehreren maschinenlesbaren Codes mit einem mobilen Endgerät (26), insbesondere Smartphone.

12. Verfahren nach Anspruch 10, **dadurch gekennzeichnet, dass** der eine maschinenlesbare Datensatz oder mindestens einer der mehreren maschinenlesbaren Datensätze mit einer Sendeeinheit (27), insbesondere eine auf der RFID-Technik basierende NFC-Sendeeinheit, an ein mobiles Endgerät (26) gesendet wird.

13. Verfahren nach einem der Ansprüche 10 bis 12, **dadurch gekennzeichnet, dass** auf dem mobilen Endgerät (26) zum Auffinden des Referenzstations-Aufstellpunktes (P1, P2, P3, P4) im Gelände ein Online-Kartendienst verfügbar ist.

14. Verfahren nach Anspruch 13, **dadurch gekennzeichnet, dass** auf dem mobilen Endgerät (26) ein Online-Kartendienst mit einer Navigationsfunktion installiert ist.

15. Verfahren nach einem der Ansprüche 10 bis 14, **dadurch gekennzeichnet, dass** der maschinenlesbare Code eine URL einer Website enthält.
